# EUROPEAN PATENT APPLICATION

(11) **EP 4 759 757 A1**
(43) Date of publication of application: **17.06.2026**
(21) Application number: 24875870.8
(22) Date of filing: 08.01.2024
(51) Int. Cl.: B65G 47/06, B65G 47/74, B65G 59/12

(54) **FEEDING APPARATUS, FEEDING METHOD, AND BATTERY ASSEMBLY LINE**

(30) Priority: 10.10.2023 CN 202311302502
(71) Applicant: Contemporary Amperex Technology Co., Limited, Ningde, Fujian 352100 (CN)
(72) Inventor: TANG, Xiaoquan, Ningde, Fujian 352100 (CN); GAO, Shihui, Ningde, Fujian 352100 (CN)
(74) Representative: Lorenz Seidler Gossel Part. mbB
(86) International application number: PCT/CN2024/071183
(87) International publication number: WO 2025/077038

(57) **Abstract**

Disclosed in the present disclosure are a feeding apparatus, a feeding method, and a battery assembly line. The feeding apparatus comprises a material rack, a workpiece conveyor line, and a transfer mechanism, wherein the material rack is provided with at least two layers of bearing portions, which are arranged in sequence at intervals in a first direction, the bearing portions on the same layer define a workpiece bearing space for accommodating a workpiece, and the bearing portions can perform reciprocating motion in the first direction along with the material rack; the workpiece conveyor line is used for conveying the workpiece, the conveying path of the workpiece conveyor line extending in a second direction that intersects with the first direction; and the transfer mechanism is configured to enter and exit the workpiece bearing space, the transfer mechanism being used for transferring the workpiece from the workpiece bearing space to the conveying path of the workpiece conveyor line.

## Description

### CROSS-REFERENCE TO RELATED APPLICATION

The present disclosure is presented based on Chinese Patent Application No. 202311302502.5, filed on October 10, 2023 and entitled "MATERIAL FEEDING APPARATUS, MATERIAL FEEDING METHOD, AND BATTERY ASSEMBLY LINE", and claims priority to the Chinese Patent Application, the content of which is incorporated herein by reference in its entirety.

### TECHNICAL FIELD

The present disclosure relates to the technical field of battery manufacturing, and in particular, to a material feeding apparatus, a material feeding method, and a battery assembly line.

### BACKGROUND

New energy batteries are increasingly widely used in life and industry. For example, new energy vehicles equipped with batteries have been widely used. In addition, batteries are also increasingly used in the field of energy storage.

In the production process of the battery, the material feeding speed of the side plate affects the working efficiency of subsequent working sections, thereby affecting the production efficiency of the whole battery. Therefore, improving the material feeding efficiency of the side plate is one of the problems that need to be solved in the industry to improve the battery production efficiency.

### SUMMARY

In order to solve the above problems in the prior art, embodiments of the present disclosure provide a material feeding apparatus, a material feeding method, and a battery assembly line, so as to increase the feeding speed of a side plate, thereby improving the production efficiency of a battery module.

The present disclosure is implemented by the following technical solutions.

A first aspect of the present disclosure provides a material feeding apparatus. The material feeding apparatus includes:
a material holder, where the material holder is provided with at least two layers of carrying parts, all layers of the carrying parts are sequentially spaced apart from each other in a first direction, the carrying part on a same layer defines a workpiece carrying space configured to accommodate a workpiece, and the carrying part is capable of reciprocating in the first direction along with the material holder;
a workpiece conveyor line, where the workpiece conveyor line is configured to convey the workpiece, and a conveying path of the workpiece conveyor line extends in a second direction intersecting with the first direction; and
a transfer mechanism, where the transfer mechanism is configured to be capable of entering and exiting the workpiece carrying space, and the transfer mechanism is configured to transfer the workpiece from the workpiece carrying space to the conveying path of the workpiece conveyor line.

By continuously conveying the workpiece through the workpiece conveyor line, there is no need to use a robotic arm or the like to carry the workpiece back and forth, which is conducive to accelerating the material feeding pace and maintaining a relatively high conveying speed throughout the operation. Therefore, in the embodiments of the present disclosure, the time for conveying the workpiece is saved, and the material discharging interval of the workpiece can be shortened, thereby improving the efficiency of feeding the workpiece.

In some embodiments, the transfer mechanism is configured to be capable of entering and exiting the workpiece carrying space in the first direction and is provided with a conveying path extending in the second direction, and the conveying path of the transfer mechanism is disposed close to the conveying path of the workpiece conveyor line in the second direction;
the transfer mechanism is configured to take the workpiece out of the workpiece carrying space and convey the workpiece in the second direction to the conveying path of the workpiece conveyor line.

A transfer action of the workpiece is performed by the transfer mechanism, so that conveying of the workpiece in the first direction can be converted into conveying of the workpiece in the second direction without reducing the pace, and there is no need for the robotic arm or the like to grab and place the workpiece back and forth, so that the efficiency of transferring the workpiece is high, which further contributes to the improvement of the efficiency of feeding the side plate, thereby improving the battery production efficiency.

In some embodiments, the material holder is provided with a bottom opening for the transfer mechanism to enter and exit the workpiece carrying space;
in a case where the material holder moves toward the transfer mechanism in the first direction, the transfer mechanism enters the workpiece carrying space through the bottom opening, so that the workpiece in the workpiece carrying space is carried on the conveying path of the transfer mechanism.

The arrangement of the bottom opening enables the transfer mechanism to move upward relative to the material holder to enter the material holder and then enter the workpiece carrying space, so that the transfer mechanism can take the workpiece from the workpiece carrying space by relative movement, resulting in a simple structure and highly efficient action.

In some embodiments, the material holder is provided with a side opening at least between two adjacent layers of the carrying parts, and the side opening faces a side where the workpiece conveyor line is located in the second direction; and
the side opening allows the workpiece carried by the transfer mechanism to pass through.

The side opening is provided and configured to allow the workpiece to pass through the material holder, so that the transfer mechanism can move the workpiece to the conveying path of the workpiece conveyor line without exiting the material holder, thereby efficiently conveying the workpiece.

In some embodiments, in the first direction, a minimum distance between two adjacent layers of the carrying parts is greater than a maximum dimension of the workpiece.

In the first direction, the minimum distance between two adjacent layers of the carrying parts is greater than the maximum dimension of the workpiece, so that the workpiece can move from the position between two adjacent layers of the carrying parts to the side opening, and the transfer mechanism can smoothly convey the workpiece without exiting the material holder.

In some embodiments, all layers of the carrying parts each include two carrying structures, the two carrying structures are separately connected to the material holder, the two carrying structures on a same layer are oppositely disposed and spaced apart from each other, and
in the second direction, a minimum distance between the two carrying structures on the same layer is greater than a maximum dimension of the transfer mechanism.

Therefore, the transfer mechanism can smoothly pass through each workpiece carrying space in the first direction, and the workpiece can be smoothly transferred to the transfer mechanism by the relative movement of the transfer mechanism and the carrying structure in the first direction, without the need to additionally provide a grabbing and placing device or the like for grabbing and placing the workpiece.

In some embodiments, the carrying structure includes a first plate extending in a third direction and a limiting block disposed at an end part of the first plate, the first plate is connected to a side wall of the material holder, the third direction intersects with both the first direction and the second direction, and
paired limiting blocks are disposed facing each other in the second direction.

The first plate is configured to carry the workpiece, and the limiting block is configured to limit the lateral position of the workpiece. The two first plates and the two limiting blocks define, in an enclosing manner, the workpiece carrying space. Moreover, the workpiece can be easily limited in the workpiece carrying space.

In some embodiments, the carrying structure includes a steel wire rope extending in the third direction, two ends of the steel wire rope are respectively connected to two opposite side parts of the material holder, and the third direction intersects with both the first direction and the second direction.

By using two steel wire ropes to carry two ends of the workpiece respectively, the structure is simple, the cost is low, and the occupied space is less.

In some embodiments, a first set position is disposed in the conveying path of the transfer mechanism, the first set position is configured to carry the workpiece or a tray, and the tray can accommodate the workpiece moved out of the workpiece carrying space.

Therefore, the workpiece can be directly carried by the transfer mechanism, and the workpiece can also be carried by the tray. Therefore, the tray can be used or not used according to the requirements of the subsequent process, which helps to reduce the time spent on placing the tray or removing the tray in the subsequent process.

In some embodiments, a tray conveyor line is disposed on a side of the material holder facing away from the workpiece conveyor line in the second direction, and the tray conveyor line is configured to convey the tray to the conveying path of the transfer mechanism.

The tray conveyor line is configured to convey the tray to the transfer mechanism, so that the tray can be continuously and automatically conveyed in accordance with the conveying speed of the workpiece to the transfer mechanism, thereby contributing to continuously carrying the workpiece by the tray.

In some embodiments, the material feeding apparatus includes a stopper structure capable of ascending and descending, and the stopper structure is configured to stop the tray at the first set position.

By providing the stopper structure, the tray can be stopped at the first set position, so as to facilitate subsequent placement of the workpiece into the tray. The stopper structure can ascend and descend, and the stopper structure can descend to remove the stop on the tray, so that the tray can smoothly move from the transfer mechanism to the conveyor line.

In some embodiments, the material feeding apparatus further includes a driving mechanism and a rack, the driving mechanism is disposed on an upper part of the rack, the material holder is disposed inside the rack, and an output end of the driving mechanism is connected to the material holder and is configured to drive the material holder to reciprocate in the first direction.

The driving mechanism is provided and configured to drive the material holder to reciprocate in the first direction. The rack is configured to mount the driving mechanism. The driving mechanism is disposed on the upper part of the rack, saving the occupancy of the internal space of the rack.

In some embodiments, one of the rack and the material holder is provided with at least one guide sliding sleeve, the other is provided with at least one guide sliding rod extending in the first direction, and the guide sliding sleeve and the guide sliding rod are slidably sleeved in a one-to-one correspondence.

The cooperative connection between the guide sliding sleeve and the guide sliding rod plays a guiding role in the movement of the material holder in the first direction, thereby improving the stability of the movement of the material holder.

In some embodiments, the material feeding apparatus includes a first sensor, the first sensor being configured to detect whether the workpiece is carried at the first set position.

The first sensor is provided and configured to detect whether the workpiece is carried at the first set position, thereby reducing the risk of placing the workpiece at an incorrect timing, which can achieve a foolproof effect.

In some embodiments, a plurality of preset pause positions sequentially spaced apart from each other in the first direction are provided in a movement path of the material holder.;
the plurality of preset pause positions are disposed in a one-to-one correspondence with a plurality of the workpiece carrying spaces, and each time the material holder moves to one of the plurality of preset pause positions in the first direction, the first set position passes through the workpiece carrying space by a preset distance and becomes a state of carrying the workpiece.

Therefore, the positional relationship between the carrying part and the first set position can be controlled by controlling the feeding distance of the material holder, so that the workpiece can be smoothly and reliably transferred from the carrying part to the transfer mechanism.

In some embodiments, the material feeding apparatus further includes a material holder position detection assembly, the material holder position detection assembly being configured to detect whether the material holder is located at the preset pause position.

The material holder position detection assembly is configured to detect whether the material holder is located at the preset pause position, so that the material holder can be controlled in an automated manner to have an appropriate feeding distance and pause at an appropriate position, and then the workpiece can be transferred to the transfer mechanism and conveyed to the workpiece conveyor line by the transfer mechanism during the pause of the material holder.

In some embodiments, the material holder position detection assembly includes a second sensor and a detection cooperation plate, one of the second sensor and the detection cooperation plate is disposed on the material holder, the other is disposed on the rack, the detection cooperation plate is provided with a plurality of openings sequentially spaced apart from each other in the first direction, the second sensor is configured to be capable of detecting whether the plurality of openings pass by, and each time the second sensor detects that one of the plurality of openings passes by, the material holder is located at one of the preset pause positions.

The second sensor cooperates with the detection cooperation plate to enable the material holder position detection assembly to detect the position of the material holder with a simple structure.

In some embodiments, the material feeding apparatus further includes a material holder mounting plate, the material holder mounting plate is connected to the output end of the driving mechanism, the driving mechanism is capable of driving the material holder mounting plate to reciprocate in the first direction, and the material holder is detachably connected to the material holder mounting plate.

Therefore, the driving mechanism drives the material holder to reciprocate in the first direction by driving the material holder mounting plate. Moreover, the material holder can be detached from the material holder mounting plate, so that the material holder can be placed at a location suitable for feeding, thereby facilitating the placement of the workpiece into the carrying part of the material holder. After a specified number of workpieces are placed in the carrying part of the material holder, the material holder is mounted onto the material holder mounting plate, and then the workpiece can be conveyed. The detachable connection between the material holder and the material holder mounting plate improves the convenience of feeding.

In some embodiments, one of the material holder mounting plate and the material holder is provided with a mounting groove, the other is provided with a mounting block, and the mounting block is snap-fitted to the mounting groove.

The cooperative snap-fit connection between the mounting block and the mounting groove achieves the detachable connection of the material holder mounting plate and the material holder, and the detachment is easy.

In some embodiments, two mounting grooves are disposed with groove openings facing each other or back-to-back in a plane perpendicular to the first direction, and two mounting blocks are disposed back-to-back or facing each other in the plane perpendicular to the first direction.

The two mounting grooves are disposed with the groove openings facing each other or back-to-back in the plane perpendicular to the first direction, and the two mounting blocks are disposed with the groove openings back-to-back or facing each other in the plane perpendicular to the first direction, so that when the two mounting blocks are snap-fitted to the two mounting grooves in a one-to-one correspondence, the two mounting grooves limit the positions of the two mounting blocks in the first direction, and then the material holder can move synchronously with the material holder mounting plate in the first direction. Moreover, the material holder can be detached by the relative sliding between the mounting block and the mounting groove, so that the material holder can be easily mounted and detached.

In some embodiments, a second set position and a third set position located downstream of the second set position are disposed in the conveying path of the workpiece conveyor line, and the transfer mechanism is capable of transferring the workpiece from the workpiece carrying space to the second set position of the workpiece conveyor line;
a positioning structure is disposed at the third set position of the workpiece conveyor line, the positioning structure is configured to be capable of limiting positions of two opposite sides of the workpiece at the third set position in the third direction, and the third direction intersects with both the first direction and the second direction.

The workpiece at the second set position can be conveyed to the third set position under the conveying action of the workpiece conveyor line, and the positioning structure at the third set position is configured to limit the positions of the two opposite sides of the workpiece in the third direction, so as to correct the position, posture, or the like of the workpiece, thereby facilitating the processing, discharging operation or the like in subsequent working sections.

In some embodiments, the positioning structure includes two first side blocking parts, the two first side blocking parts being respectively located on two opposite sides of the workpiece conveyor line at the third set position in the third direction.

The two first side blocking parts can respectively limit the two opposite sides of the workpiece at the third set position in the third direction, so as to correct the position and posture of the workpiece, thereby facilitating the processing, discharging operation or the like in the subsequent working sections.

In some embodiments, one end of the first side blocking part proximal to the second set position is provided with a guide structure, and a distance between two opposite side walls of two said guide structures in the third direction gradually decreases in a conveying direction of the workpiece conveyor line.

The limitation of the side walls of the two guide structures plays a guiding role for the workpiece to enter the space between the two first side blocking parts, so that the workpiece conveyed from the second set position can smoothly enter the positioning structure at the third set position. As a result, the workpiece can be positioned and the workpiece can be conveyed at the same time.

In some embodiments, the workpiece includes a side plate of a battery.

The material feeding apparatus according to the embodiments of the present disclosure may be applied to the feeding of the side plate in the battery assembly process. The side plate as the workpiece is conveyed by the workpiece conveyor line, so that the side plate can be conveyed continuously and rapidly. Therefore, in the embodiments of the present disclosure, the time for conveying the side plate is saved, and the material discharging interval of the side plate can be shortened, thereby improving the material feeding efficiency of the side plate, and facilitating the acceleration of the takt time of the whole battery production line.

A second aspect of the present disclosure provides a material feeding method, feeding a workpiece by using a material feeding apparatus. The material feeding apparatus includes a material holder, a workpiece conveyor line, and a transfer mechanism, where the material holder is provided with at least two layers of carrying parts, all layers of the carrying parts are sequentially spaced apart from each other in a first direction, and the carrying part on a same layer defines a workpiece carrying space configured to accommodate a workpiece. The material feeding method includes:
a placing step: placing the workpiece onto the carrying part;
a material holder moving step: moving the material holder in the first direction to pass through the workpiece carrying space by a preset distance and then stopping the material holder;
a transferring step: transferring, by the transfer mechanism passing through one of the workpiece carrying spaces, the workpiece removed from the workpiece carrying space to the conveying path of the workpiece conveyor line; and
a conveying step: conveying, by the workpiece conveyor line, the transferred workpiece.

By continuously conveying the workpiece through the workpiece conveyor line, there is no need to use a robotic arm or the like to carry the workpiece back and forth, which is conducive to accelerating the material feeding pace and maintaining a relatively high conveying speed throughout the operation. Therefore, in the embodiments of the present disclosure, the time for conveying the workpiece is saved, and the material discharging interval of the workpiece can be shortened, thereby improving the efficiency of feeding the workpiece.

In some embodiments, the material feeding apparatus further includes a rack, the material holder is disposed inside the rack, and the placing step includes:
detaching the material holder from the rack, and placing the material holder at a feeding location;
placing the workpiece onto the carrying part; and
mounting the material holder into which a specified number of the workpieces are placed onto the rack.

The material holder is detached first, then the workpiece is loaded into the material holder, and the material holder is mounted after the workpiece is loaded into the material holder. Compared with loading the workpiece into the material holder mounted on the rack, the manner can improve the convenience of material loading.

A third aspect of the present disclosure provides a battery assembly line, and the battery assembly line includes:
the material feeding apparatus according to the first aspect of the present disclosure; and
a logistics line, where the logistics line is configured to convey a workpiece, the workpiece including a side plate; and
a side plate tape attachment device, the side plate tape attachment device being configured to attach tape to the workpiece, where
the workpiece conveyed by the logistics line is loaded on the carrying part of the material holder of the material feeding apparatus,
the transfer mechanism is capable of transferring the workpiece carried by the carrying part to the conveying path of the workpiece conveyor line, the workpiece conveyor line is capable of conveying the workpiece transferred to the conveying path of the workpiece conveyor line to a third set position for positioning, and
the side plate tape attachment device attaches the tape to the workpiece located at the third set position.

Since the battery assembly line includes the material feeding apparatus according to the first aspect of the present disclosure, and the material feeding efficiency of the material feeding apparatus is high, the assembly efficiency of the battery assembly line is improved.

### ADVANTAGEOUS EFFECTS OF INVENTION

The embodiments of the present disclosure can provide a material feeding apparatus, a material feeding method, and a battery assembly line, so as to increase the feeding speed of the side plate, thereby improving the production efficiency of the battery module.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present disclosure. Furthermore, the same reference numerals in all the drawings denote identical components. In the drawings:
FIG. 1 is a structural schematic view of a material feeding apparatus from one perspective according to some embodiments of the present disclosure;
FIG. 2 is a three-dimensional schematic exploded view of a partial structure of a material feeding apparatus according to some embodiments of the present disclosure;
FIG. 3 is a three-dimensional schematic view of another partial structure of a material feeding apparatus according to some embodiments of the present disclosure;
FIG. 4 is a structural schematic view of a material feeding apparatus from another perspective according to some embodiments of the present disclosure;
FIG. 5 is a partially enlarged schematic view of a portion A in FIG. 4;
FIG. 6 is a three-dimensional schematic exploded view of still another partial structure of a material feeding apparatus according to some embodiments of the present disclosure;
FIG. 7 is a structural schematic view of a material feeding apparatus according to some embodiments of the present disclosure;
FIG. 8 is a partially enlarged schematic view of a portion B in FIG. 7;
FIG. 9 is a schematic view of a composition of an action control module of a material feeding apparatus according to some embodiments of the present disclosure;
FIG. 10 is a schematic flowchart of a material feeding method according to some embodiments of the present disclosure;
FIG. 11 is another schematic flowchart of a material feeding method according to some embodiments of the present disclosure; and
FIG. 12 is a schematic view of a composition of a battery assembly line according to some embodiments of the present disclosure.

### Description of the reference numerals:

1000 workpiece; 2000 logistics line; 3000 side plate tape attachment device; 10 controller;
11 material holder; 111 material holder top plate; 112 material holder supporting column; 12 carrying part; 121 carrying structure; 1211 first plate; 1212 limiting block; 12121 first limiting part; 12122 second limiting part; 12123 lead-in inclined surface; 13 mounting block;
2 driving mechanism; 3 transfer mechanism;
4 workpiece conveyor line; 41 first conveying frame; 42 first roller shaft; 43 first belt; 44 first driving member; 45 positioning structure; 451 first side blocking part; 452 guide structure;
5 rack; 51 rack top plate; 52 support part; 53 accommodating case;
61 guide sliding sleeve; 62 guide sliding rod;
71 first sensor; 72 mounting rod; 73 material holder position detection assembly; 731 second sensor; 732 detection cooperation plate;
8 material holder mounting plate; 81 mounting groove;
91 tray; 911 limiting structure; 92 tray conveyor line; 93 stopper structure; 94 driving member.

### DETAILED DESCRIPTION

Embodiments of the technical solutions of the present disclosure will be described in detail below with reference to the drawings. The following embodiments are only used to more clearly illustrate the technical solutions of the present disclosure, and therefore, are only exemplary and do not limit the protection scope of the present disclosure.

Unless otherwise defined, all technical and scientific terms used herein have the same meaning as commonly understood by those skilled in the technical field to which the present disclosure belongs. The terms used herein are only used to illustrate the specific embodiments, rather than limit the present disclosure. The terms "include", "comprise", "have", and "provided with", and any variants thereof in the present disclosure are intended to cover non-exclusive inclusions.

In the description of the embodiments of the present disclosure, technical terms such as "first", "second", and "third" are only used to distinguish different objects and should not be interpreted as indicating or implying the relative importance or implicitly indicating the number, specific order, or primary and secondary relationship of the technical features referred to. In the description of the embodiments of the present disclosure, unless otherwise specifically defined, "plurality of" means two or more.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present disclosure, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present disclosure, the technical terms "length", "width", "thickness", "upper", "lower", "front", "rear", "left", "right", "vertical", "horizontal", "top", "bottom", "inner", "outer", and the like indicating directional or positional relationships are based on the directional or positional relationships shown in the drawings. They are merely for the convenience of describing the embodiments of the present disclosure and simplifying the description, and are not intended to indicate or imply that the apparatuses or elements referred to must have specific directions, or be constructed, operated or used in specific directions. Therefore, these terms should not be construed as limitations on the embodiments of the present disclosure.

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise explicitly specified and defined, the technical term "contact" should be understood in a broad sense, and may be direct contact, or contact via an intermediate layer, or contact with substantially no interaction force between the two in contact, or contact with an interaction force between the two in contact.

Hereinafter, the present disclosure will be described in detail.

At present, new energy batteries are being applied more and more widely in life and industry. New energy batteries are not only applied in energy storage power systems such as hydropower, thermal power, wind power, and solar power stations, but are also widely applied in electric transportation vehicles such as electric bicycles, electric motorcycles, and electric vehicles, as well as in aerospace and other fields. With the continuous expansion of the application field of power batteries, the market demand for power batteries is also constantly increasing.

In the production process of the battery, the material feeding speed of the side plate affects the working efficiency of subsequent working sections, thereby affecting the production efficiency of the whole battery. Therefore, improving the material feeding efficiency of the side plate is one of the problems that need to be solved in the industry to improve the battery production efficiency.

The side plate of the battery is usually a plate-shaped member disposed near the large surface and/or the side surface of the battery, and may be bonded to the large surface and/or the side surface of the battery sometimes. The side plate may consist of a single plate or a plurality of plates.

The inventors of the present disclosure noted that in the existing side plate feeding solution, the side plate is positioned by a positioning structure and then grabbed by a robotic arm to be fed. After the robotic arm grabs the side plate and conveys the side plate to the next station, the robotic arm needs to return to the positioning structure to grab the next side plate, and the robotic arm needs to make a round trip to complete the feeding of one side plate, and consequently the feeding interval of the side plate is limited by the pace of the robotic arm, resulting in limitation on the feeding speed of the side plate. Therefore, there is room for further improvement in the material feeding pace.

The inventors of the present disclosure have found through research that by using a conveyor line instead of the robotic arm to convey and feed the side plate, the material discharging interval of the side plate can be shortened, the efficiency of feeding the side plate can be improved, and the battery production efficiency can be further improved.

Based on this design concept, the inventors of the present disclosure have designed a material feeding apparatus. The material feeding apparatus includes a material holder, a workpiece conveyor line, and a transfer mechanism. The material holder is provided with at least two layers of carrying parts, all layers of the carrying parts are sequentially spaced apart from each other in a first direction, the carrying part on the same layer defines a workpiece carrying space for accommodating a workpiece, and the carrying part is capable of reciprocating in the first direction along with the material holder. The workpiece conveyor line is configured to convey the workpiece, and a conveying path of the workpiece conveyor line extends in a second direction intersecting with the first direction. The transfer mechanism is configured to be capable of entering and exiting the workpiece carrying space, and the transfer mechanism is configured to transfer the workpiece from the workpiece carrying space to the conveying path of the workpiece conveyor line.

By continuously conveying the side plate through the workpiece conveyor line, there is no need to use a robotic arm or the like to carry the workpiece back and forth, which is conducive to accelerating the material feeding pace and maintaining a relatively high conveying speed throughout the operation. Therefore, in the embodiments of the present disclosure, the time for conveying the side plate is saved, and the material discharging interval of the side plate can be shortened, thereby improving the efficiency of feeding the side plate and further improving the battery production efficiency.

The material feeding apparatus according to the embodiments of the present disclosure may be, but is not limited to be, used for feeding the side plate of the battery, may also be used for feeding components such as a cover plate, a bottom plate, front and rear end plates, a battery cell, a cold plate, and a conductive connecting member of the battery, and may also be used for feeding other workpieces. Since the material feeding apparatus according to the embodiments of the present disclosure has a high material feeding pace and high efficiency, the assembly efficiency of the battery and other apparatuses can be improved.

In the embodiments of the present disclosure, the battery may be a battery cell.

The battery cell refers to a basic unit that can realize the mutual conversion between chemical energy and electric energy. It can be used for making battery modules or battery packs to supply power to electric devices.

The battery cell may be a secondary battery, which refers to a battery cell that can continue to be used by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickelcadmium battery, a lead storage battery, and the like. This is not limited in the embodiments of the present disclosure.

In the embodiments of the present disclosure, the battery may be a single physical module including one or more battery cells to provide a higher voltage and capacity. When there are a plurality of battery cells, the plurality of battery cells are connected in series, in parallel, or in series-parallel by a busbar component.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

For ease of description, the following embodiments are described with reference to the accompanying drawings.

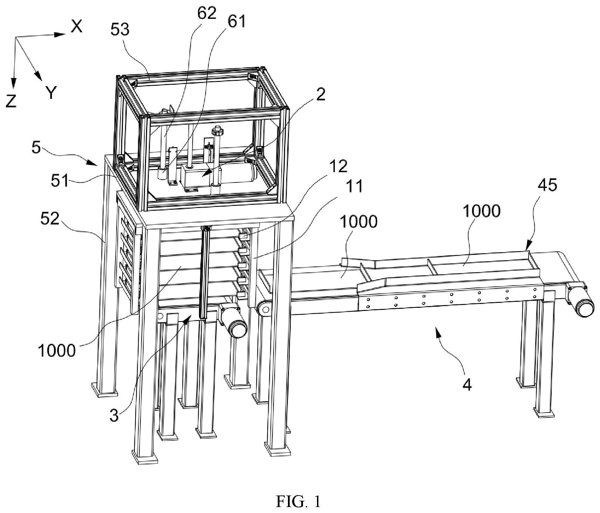

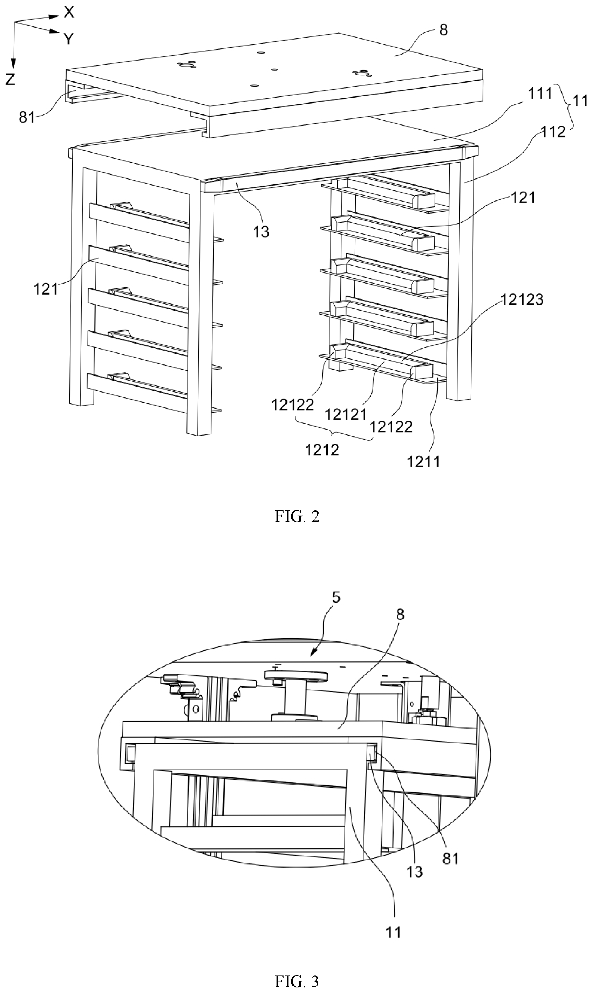

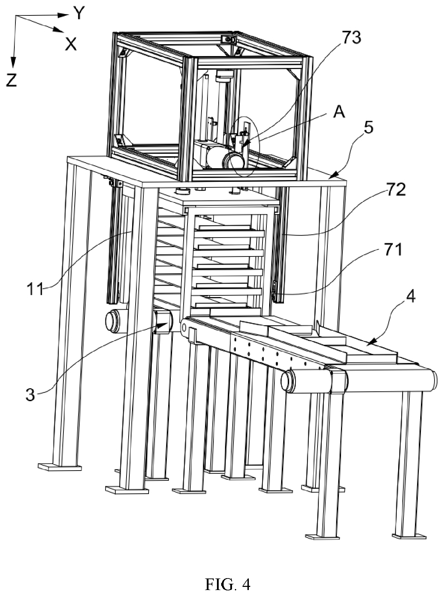

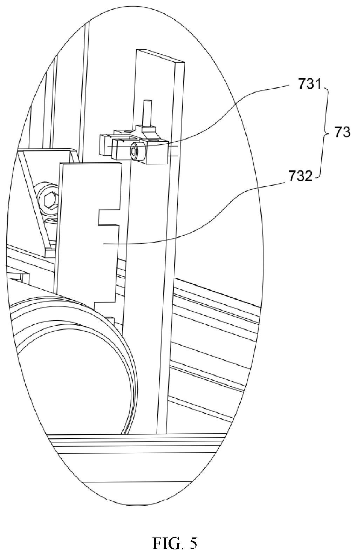

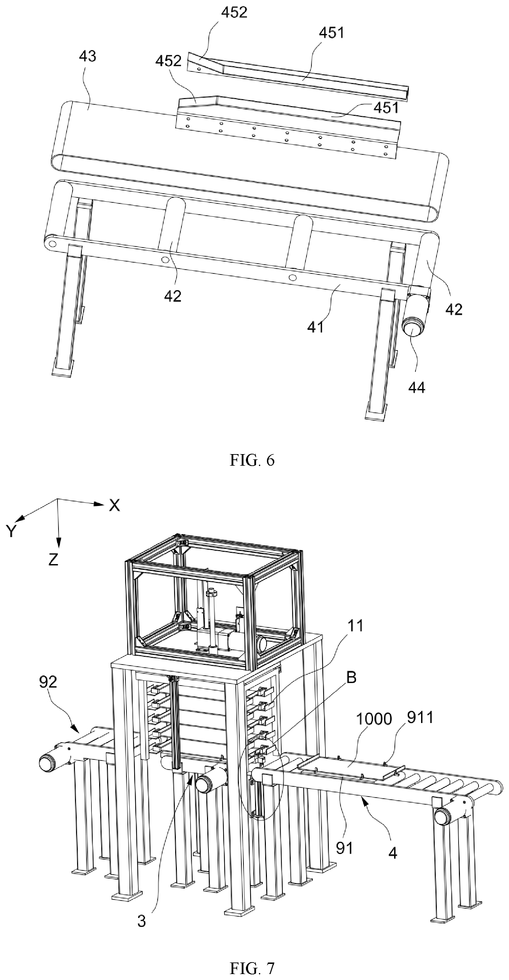

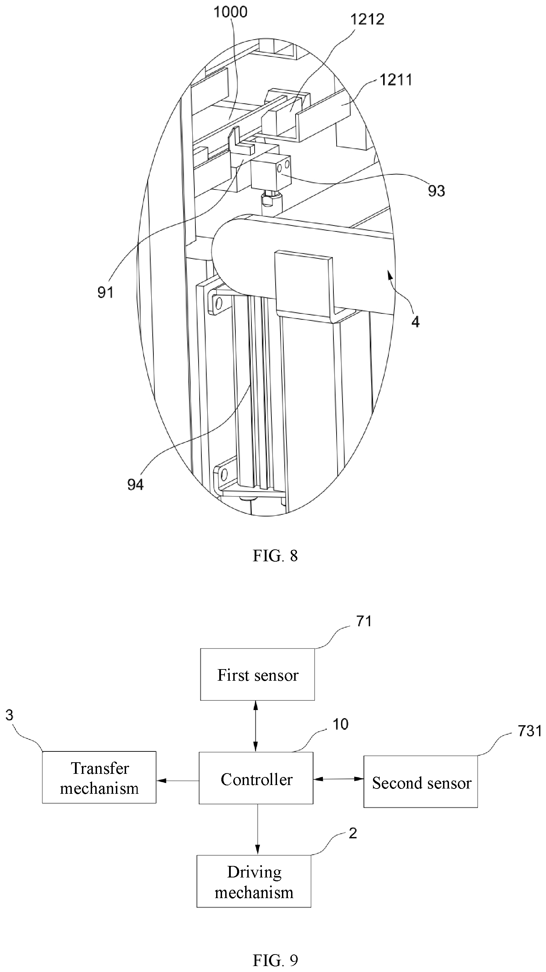

FIG. 1 is a structural schematic view of a material feeding apparatus from one perspective according to some embodiments of the present disclosure; FIG. 2 is a three-dimensional schematic exploded view of a partial structure of a material feeding apparatus according to some embodiments of the present disclosure; FIG. 3 is a three-dimensional schematic view of another partial structure of a material feeding apparatus according to some embodiments of the present disclosure; FIG. 4 is a structural schematic view of a material feeding apparatus from another perspective according to some embodiments of the present disclosure; FIG. 5 is a partially enlarged schematic view of a portion A in FIG. 4; FIG. 6 is a three-dimensional schematic exploded view of still another partial structure of a material feeding apparatus according to some embodiments of the present disclosure; FIG. 7 is a structural schematic view of a material feeding apparatus according to some embodiments of the present disclosure; and FIG. 8 is a partially enlarged schematic view of a portion B in FIG. 7.

In some embodiments of the present disclosure, for ease of description, a first direction, a second direction, and a third direction are set, and the first direction, the second direction, and the third direction are directions intersecting with each other. Herein, "intersecting with each other" includes "perpendicularly intersecting with each other". In order to facilitate understanding of the embodiments of the present disclosure, in the embodiments shown in FIGs. 1 to 8, the first direction, the second direction, and the third direction are described as examples of directions perpendicularly intersecting with each other, but those skilled in the art should understand that the embodiments of the present disclosure are not limited to the case where the three directions perpendicularly intersect with each other. For ease of description, as shown by arrows in FIGs. 1, 2, 4, and 7, a direction of an arrow Z is used as the first direction, a direction of an arrow X is used as the second direction, and a direction of an arrow Y is used as the third direction. The direction indicated by the arrow Z in the first direction is also referred to as "downward", and its opposite direction is referred to as "upward".

Embodiments of the present disclosure provide a material feeding apparatus. As shown in FIG. 1, the material feeding apparatus includes a material holder 11, a transfer mechanism 3, a workpiece conveyor line 4, and at least two layers of carrying parts 12, where the material holder 11 is provided with the at least two layers of carrying parts 12, all layers of the carrying parts 12 are sequentially spaced apart from each other in the first direction, the carrying part 12 on the same layer defines a workpiece carrying space for accommodating a workpiece 1000, and the carrying part 12 is capable of reciprocating in the first direction along with the material holder 11; the workpiece conveyor line 4 is configured to convey the workpiece 1000, and a conveying path of the workpiece conveyor line 4 extends in the second direction intersecting with the first direction; and the transfer mechanism 3 is configured to be capable of entering and exiting the workpiece carrying space, and the transfer mechanism 3 is configured to transfer the workpiece 1000 from the workpiece carrying space to the conveying path of the workpiece conveyor line 4.

The material holder 11 is provided with the at least two layers of the carrying parts 12, each layer of the carrying part 12 is configured to carry the workpiece 1000, and the entire material holder 11 can move as a whole, so that all the carrying parts 12 in the material holder 11 can move synchronously.

The workpiece carrying space defined by the carrying part 12 on the same layer may accommodate one, two, three, four, or other number of workpieces 1000, and the specific number is not limited herein. In the embodiments of the present disclosure, accommodating one workpiece 1000 (specifically, a side plate for a battery) is taken as an example for illustration.

The transfer mechanism 3 is a mechanism configured to transfer the workpiece 1000 accommodated in the workpiece carrying space of the carrying part 12 to the conveying path of the workpiece conveyor line 4. The transfer mechanism 3 may be a structure formed by combining a pusher block with a power device such as a cylinder or a linear motor. Such a transfer mechanism can push the workpiece 1000 from the workpiece carrying space to the conveying path of the workpiece conveyor line 4. The transfer mechanism 3 may also be a conveying mechanism, such as a conveyor belt or a multi-speed chain. Such a transfer mechanism 3 can carry the workpiece 1000 and transfer the workpiece 1000 out of the workpiece carrying space to the workpiece conveyor line 4. Certainly, the transfer mechanism 3 may also be a robotic arm that grabs the workpiece 1000 from the workpiece carrying space and then moves the workpiece to the conveying path of the workpiece conveyor line 4. In the case that the transfer mechanism 3 is a robotic arm, since the transfer is only performed by the robotic arm, the travel distance of the transfer via the robotic arm is significantly shortened, and the material discharging interval of the side plate can still be shortened, thereby improving the efficiency of side plate feeding and further improving the battery production efficiency.

The conveying mechanism is a mechanical device that conveys materials along a certain path in a continuous, uniform, and stable conveying manner. Common conveying mechanisms include a belt conveyor, a chain conveyor, a roller conveyor, a multi-speed chain conveyor, a wheel conveyor, and the like. In the present disclosure, the workpiece conveyor line 4 may be any one of a belt conveyor, a chain conveyor, a roller conveyor, a multi-speed chain conveyor, and a wheel conveyor.

In the material feeding apparatus according to the embodiments of the present disclosure, the workpiece 1000 is conveyed by the workpiece conveyor line 4, and the workpiece conveyor line 4 can perform unidirectional continuous conveying without carrying the workpiece back and forth like the robotic arm, which is beneficial to accelerating the material feeding pace and maintaining a relatively high conveying speed throughout the operation. Therefore, in the embodiments of the present disclosure, the time for conveying the workpiece 1000 is saved, and the material discharging interval of the workpiece 1000 can be shortened, thereby improving the feeding efficiency of the workpiece 1000.

According to some embodiments of the present disclosure, the transfer mechanism 3 includes the linear power device (for example, but not limited to, the cylinder and the linear motor) and the pusher block (not shown in the figure), the linear power device is disposed on a side of the material holder 11 facing away from the workpiece conveyor line 4 in the second direction, an output end of the linear power device is disposed facing the workpiece conveyor line 4, and the pusher block is connected to the output end of the linear power device. When the material holder 11 moves in the first direction to a position where the workpiece carrying space of one layer of the carrying part 12 directly faces the pusher block in the second direction, the material holder 11 stops moving. The linear power device drives the pusher block to move in the second direction, the pusher block enters the workpiece carrying space directly facing the pusher block and pushes the workpiece 1000 in the workpiece carrying space to move out in the second direction until the workpiece 1000 moves to the conveying path of the workpiece conveyor line 4, and the linear power device drives the pusher block to exit the material holder 11, so that the material holder 11 moves in the first direction again to perform material feeding operation on the workpiece 1000 carried by another layer of the carrying part 12.

According to some embodiments of the present disclosure, the transfer mechanism 3 is configured to be capable of entering and exiting the workpiece carrying space in the first direction and is provided with a conveying path extending in the second direction, and the conveying path of the transfer mechanism 3 is disposed close to the conveying path of the workpiece conveyor line 4 in the second direction; the transfer mechanism 3 is configured to take the workpiece 1000 out of the workpiece carrying space and convey the workpiece to the conveying path of the workpiece conveyor line 4 in the second direction.

The transfer mechanism 3 is, for example, disposed below the material holder 11, and may be any one of a belt conveyor, a chain conveyor, a roller conveyor, a multi-speed chain conveyor, and a wheel conveyor. The transfer mechanism 3 may be provided with, for example, a carrying surface facing upward (one side in the first direction), and the carrying surface may be a belt surface in the belt conveyor or a carrying surface defined by the multi-speed chain in the multi-speed chain conveyor.

In the case where the material holder 11 moves toward the transfer mechanism 3 in the first direction, all layers of the carrying parts 12 in the material holder 11 move synchronously. As the material holder 11 moves in the first direction, the transfer mechanism 3 enters the workpiece carrying space. In the case where the workpiece 1000 is accommodated in the workpiece carrying space, the transfer mechanism 3 may support the workpiece 1000 to cause the workpiece to exit the carrying part 12 and be removed from the workpiece carrying space. The removed workpiece 1000 moves to the conveying path of the workpiece conveyor line 4 under the conveying action of the transfer mechanism 3, and then the workpiece 1000 is conveyed by the workpiece conveyor line 4. In the case where there is no workpiece 1000 in the workpiece carrying space entered by the transfer mechanism 3, the material holder 11 continues to move toward the transfer mechanism 3 in the first direction, and the transfer mechanism 3 enters the workpiece carrying spaces one by one in the first direction until the transfer mechanism 3 enters a workpiece carrying space that accommodates the workpiece 1000. The workpiece 1000 in the workpiece carrying space undergoes the above transfer movement process.

The transfer action of the workpiece 1000 is performed through the transfer mechanism 3, so that conveying of the workpiece in the first direction can be converted into conveying of the workpiece in the second direction without reducing the pace. Since the transfer mechanism 3 is configured for one-way conveying, there is no need to grab and place the workpiece back and forth like the robotic arm, and the efficiency of transferring the workpiece 1000 is high, which further helps to improve the efficiency of the side plate feeding, thereby improving the battery production efficiency.

According to some embodiments of the present disclosure, the material holder 11 is provided with a bottom opening for the transfer mechanism 3 to enter and exit the workpiece carrying space. In the case where the material holder 11 moves toward the transfer mechanism 3 in the first direction, the transfer mechanism 3 enters the workpiece carrying space through the bottom opening, so that the workpiece 1000 in the workpiece carrying space is carried on the conveying path of the transfer mechanism 3.

The bottom opening is an opening formed in the bottom of the material holder 11 for the transfer mechanism 3 to enter the internal space of the material holder 11 and then enter the workpiece carrying space of the carrying part 12.

The arrangement of the bottom opening enables the transfer mechanism 3 to move upward relative to the material holder 11 to enter the material holder 11 and then enter the workpiece carrying space, so that the transfer mechanism can take the workpiece from the workpiece carrying space by relative movement, resulting in a simple structure and highly efficient action.

According to some embodiments of the present disclosure, the material holder 11 is provided with a side opening at least between two adjacent layers of the carrying parts 12, the side opening faces a side where the workpiece conveyor line 4 is located in the second direction, and the side opening allows the workpiece 1000 carried on the conveying path of the transfer mechanism 3 to pass through.

The side opening is an opening formed in a side portion of the material holder 11 and configured to allow the workpiece 1000 conveyed in the second direction under the conveying effect of the transfer mechanism 3 to pass through, such that the workpiece 1000 passes through the material holder 11 and then moves to the conveying path of the workpiece conveyor line 4.

The side opening is provided and configured to allow the workpiece 1000 to pass through the material holder 11, so that the transfer mechanism 3 can move the workpiece 1000 to the conveying path of the workpiece conveyor line 4 without exiting the material holder 11, thereby efficiently conveying the workpiece 1000.

According to some embodiments of the present disclosure, in the first direction, the minimum distance between two adjacent layers of the carrying parts 12 is greater than the maximum dimension of the workpiece 1000.

In the first direction, the minimum distance between two adjacent layers of the carrying parts 12 is greater than the maximum dimension of the workpiece 1000, so that the workpiece 1000 can move from the position between two adjacent layers of the carrying parts 12 to the side opening, and the transfer mechanism can smoothly convey the workpiece 1000 without exiting the material holder 11.

According to some embodiments of the present disclosure, the side opening is disposed only on one side of the material holder 11 facing the workpiece conveyor line 4 in the second direction.

The side opening on the side can allow the workpiece 1000 to pass through, or can be configured to load the workpiece 1000 into the material holder 11.

According to some embodiments of the present disclosure, side openings are disposed on two opposite sides of the material holder 11 in the second direction.

The side opening formed on the side facing the workpiece conveyor line 4 can allow the workpiece 1000 to pass through, or can be configured to load the workpiece 1000 into the material holder 11, and the side opening on the opposite side can be configured to load the workpiece 1000 into the material holder 11.

According to some embodiments of the present disclosure, as shown in FIGs. 1 and 2, each layer of the carrying part 12 includes two carrying structures 121, the two carrying structures 121 are separately connected to the material holder 11, the two carrying structures 121 on the same layer are oppositely disposed and spaced apart from each other, and in the second direction, the minimum distance between the two carrying structures 121 on the same layer is greater than the maximum dimension of the transfer mechanism 3.

The two carrying structures 121 on the same layer respectively carry two ends of the workpiece 1000, and the gap between the two carrying structures 121 on the same layer allows the transfer mechanism 3 to pass through from below.

Therefore, the transfer mechanism 3 can smoothly pass through each workpiece carrying space in the first direction, and the workpiece 1000 can be smoothly transferred to the transfer mechanism 3 by the relative movement of the transfer mechanism 3 and the carrying structure 121 in the first direction, without the need to additionally provide a grabbing and placing device or the like for grabbing and placing the workpiece 1000.

According to some embodiments of the present disclosure, as shown in FIG. 2, the carrying structure 121 includes a first plate 1211 extending in the third direction and a limiting block 1212 disposed at the end part of the first plate 1211, the first plate 1211 is connected to the side wall of the material holder 11, the third direction intersects with both the first direction and the second direction, and the paired limiting blocks 1212 are disposed facing each other in the second direction.

The first plate 1211 is configured to carry the workpiece 1000, and the limiting block 1212 is configured to limit the lateral position of the workpiece 1000. The two first plates 1211 and the two limiting blocks 1212 define, in an enclosing manner, the workpiece carrying space, and the workpiece 1000 can be easily limited in the workpiece carrying space.

According to some embodiments of the present disclosure, the limiting block 1212 includes a first limiting part 12121 and two second limiting parts 12122 respectively connected to two ends of the first limiting part 12121. The first limiting part 12121, the first plate 1211, and the two second limiting parts 12122 define, in an enclosing manner, an accommodating space for accommodating one end of the workpiece 1000, and the first limiting part 12121 and the two second limiting parts 12122 respectively limit three adjacent side edges of the one end of the workpiece 1000.

The limitation of the specific structure of the limiting block 1212 improves the stability of the carrying part 12 in carrying the workpiece 1000.

According to some embodiments of the present disclosure, the inner walls of the first limiting part 12121 and the second limiting part 12122 are each provided with a lead-in inclined surface 12123.

The lead-in inclined surface 12123 is provided to play a lead-in role during the loading of the workpiece 1000.

According to some embodiments of the present disclosure, the carrying structure 121 includes a steel wire rope extending in the third direction, two ends of the steel wire rope are respectively connected to two opposite side parts of the material holder 11, and the third direction intersects with both the first direction and the second direction.

By using two steel wire ropes to carry two ends of the workpiece 1000 respectively, the structure is simple, the cost is low, and the occupied space is less.

According to some embodiments of the present disclosure, as shown in FIG. 2, the material holder 11 includes a material holder top plate 111 and four material holder supporting columns 112, the four material holder supporting columns 112 are respectively connected to four corners of the bottom surface of the material holder top plate 111, two ends of one carrying structure 121 are respectively connected to two adjacent material holder supporting columns 112, and two ends of the other carrying structure 121 are respectively connected to the other two material holder supporting columns 112. The region between bottom ends of the four material holder supporting columns 112 is the bottom opening of the material holder 11, and the region defined, in an enclosing manner, by two adjacent carrying structures 121 in the first direction and two material holder supporting columns 112 connected to the two carrying structures 121 is the side opening of the material holder 11.

The material holder 11 is formed by connecting the material holder top plate 111 and the four material holder supporting columns 112, and as a result, the structure of the material holder 11 is simple, which not only improves the structural stability of the material holder 11, but also reduces the cost. The side openings formed on two sides of the material holder 11 in the second direction are configured to allow the passage and/or loading of the workpiece 1000. Two sides of the material holder 11 in the third direction each have two material holder supporting columns 112, and the space between the two material holder supporting columns 112 on the same side may also be configured to allow the loading of the workpiece 1000.

According to some embodiments of the present disclosure, as shown in FIG. 1, the material feeding apparatus further includes a driving mechanism 2 and a rack 5, the driving mechanism 2 is disposed on the upper part of the rack 5, the material holder 11 is disposed inside the rack 5, and the output end of the driving mechanism 2 is connected to the material holder 11 and is configured to drive the material holder 11 to reciprocate in the first direction.

The driving mechanism 2 is provided and configured to drive the material holder 11 to reciprocate in the first direction. The rack 5 is configured to mount the driving mechanism 2. The driving mechanism 2 is disposed on the upper part of the rack 5, saving the occupancy of the internal space of the rack 5.

According to some embodiments of the present disclosure, as shown in FIG. 1, the rack 5 includes a rack top plate 51 and a support part 52, the rack top plate 51 is connected to the top part of the support part 52, the material holder 11 is movably disposed below the rack top plate 51 in the first direction, and the transfer mechanism 3 is disposed below the rack top plate 51.

The rack 5 is provided and configured to mount the material holder 11.

According to some embodiments of the present disclosure, the support part 52 includes four rack supporting columns, the four rack supporting columns are respectively connected to four corners of the bottom surface of the rack top plate 51, the material holder 11 and the transfer mechanism 3 are disposed in the space between the rack top plate 51 and the four rack supporting columns, and the driving mechanism 2 is connected to the upper part of the rack top plate 51.

The rack top plate 51 is supported by the four rack supporting columns, featuring a simple structure that improves stability while reducing costs.

According to some embodiments of the present disclosure, the driving mechanism 2 includes a linear motor, the linear motor is mounted on the upper part of the rack top plate 51, the output shaft of the linear motor moves in the first direction to pass through the rack top plate 51, and the end part of the output shaft is connected to the material holder top plate 111 of the material holder 11.

According to some embodiments of the present disclosure, the driving mechanism 2 includes a cylinder, the cylinder is mounted on the upper part of the rack top plate 51, the piston rod of the cylinder moves in the first direction to pass through the rack top plate 51, and the end part of the piston rod is connected to the material holder top plate 111 of the material holder 11.

According to some embodiments of the present disclosure, as shown in FIG. 1, one of the rack 5 and the material holder 11 is provided with at least one guide sliding sleeve 61, and the other is provided with at least one guide sliding rod 62 extending in the first direction. The guide sliding sleeve 61 and the guide sliding rod 62 are slidably sleeved in a one-to-one correspondence.

The cooperative connection between the guide sliding sleeve 61 and the guide sliding rod 62 plays a guiding role in the movement of the material holder 11 in the first direction, thereby improving the stability of the movement of the material holder 11.

According to some embodiments of the present disclosure, two guide sliding sleeves 61 and two guide sliding rods 62 are provided, the two guide sliding sleeves 61 and the two guide sliding rods 62 are slidably connected in a one-to-one correspondence, and the two groups of guide sliding sleeves 61 and guide sliding rods 62 that are slidably connected in a cooperative manner are symmetrically disposed about the center line of the material holder 11 in the first direction, thereby further improving the stability of the movement of the material holder 11.

According to some embodiments of the present disclosure, the guide sliding sleeve 61 is connected to the rack top plate 51, the bottom end of the guide sliding rod 62 is connected to the material holder 11, the guide sliding rod 62 is slidably provided in the guide sliding sleeve 61 in a penetrating manner, the top end of the guide sliding rod 62 extends upward out of the rack top plate 51, and the top end of the guide sliding rod 62 is connected to a limiting sleeve.

Due to such an arrangement, the part of the guide sliding rod 62 is located above the rack top plate 51, thereby saving the space below the rack top plate 51 occupied by the guide sliding rod 62. The arrangement of the limiting sleeve limits the extreme position of sliding of the guide sliding rod 62 and prevents the guide sliding rod 62 from being disengaged from the guide sliding sleeve 61.

According to some embodiments of the present disclosure, an accommodating case 53 is fixedly disposed on the upper part of the rack top plate 51, and the portions of the driving mechanism 2 and the guide sliding rod 62 located on the upper part of the rack top plate 51 are both disposed in the accommodating case 53.

The accommodating case 53 is of a case structure, and the interior of the accommodating case is configured to accommodate components located on the upper part of the rack top plate 51. The accommodating case 53 may be in various shapes and dimensions, such as a rectangular parallelepiped, a cylinder, or a hexagonal prism. Specifically, the shape of the accommodating case 53 may be determined according to the specific distribution and dimensions of the components accommodated therein. The accommodating case 53 may be made of various materials, such as copper, iron, aluminum, stainless steel, aluminum alloy, and plastic.

The arrangement of the accommodating case 53 prevents the guide sliding rod 62 and the driving mechanism 2 on the upper part of the rack top plate 51 from colliding with external components, thereby protecting the guide sliding rod 62 and the driving mechanism 2 on the upper part of the rack top plate 51.

According to some embodiments of the present disclosure, the accommodating case 53 includes a frame and plates mounted on the frame. Here, the frame may be substantially in a rectangular parallelepiped shape, and for example, the plate may be transparent. The frame of the accommodating case 53 includes a first rectangular frame, a second rectangular frame, and four connecting rods, the first rectangular frame is fixedly connected to the upper part of the rack top plate 51, the second rectangular frame and the first rectangular frame are spaced apart from each other in the first direction, one end of each of the four connecting rods is connected to each of the four corners of the first rectangular frame, and the other end of each of the four connecting rods is connected to each of the four corners of the second rectangular frame. The frame of the accommodating case 53 forms a rectangular frame on all five surfaces except the bottom surface, and a plate, which may be transparent, is mounted in each rectangular frame.

Due to such an arrangement, the accommodating case 53 not only protects the internal components, but also allows people to observe the operating state of the internal components through the transparent plate.

According to some embodiments of the present disclosure, the transparent plate includes at least one of a polycarbonate plate, an acrylic plate, a polyethylene plate, a polypropylene plate, and a glass plate.

According to some embodiments of the present disclosure, as shown in FIGs. 1 to 3, the material feeding apparatus further includes a material holder mounting plate 8, the material holder mounting plate 8 is connected to the output end of the driving mechanism 2, the driving mechanism 2 is capable of driving the material holder mounting plate 8 to reciprocate in the first direction, and the material holder 11 is detachably connected to the material holder mounting plate 8.

The driving mechanism 2 drives the material holder 11 to reciprocate in the first direction by driving the material holder mounting plate 8. The material holder 11 and the material holder mounting plate 8 are detachably connected, that is, the material holder 11 can be detached from the material holder mounting plate 8, and the material holder 11 is placed at a feeding location, thereby facilitating the placement of the workpiece 1000 into the carrying part 12 of the material holder 11. After a specified number of workpieces 1000 are placed in the material holder, the material holder 11 is mounted onto the material holder mounting plate 8, and then the workpiece 1000 can be conveyed.

According to some embodiments of the present disclosure, one of the rack top plate 51 and the material holder mounting plate 8 is provided with at least one guide sliding sleeve 61, and the other is provided with at least one guide sliding rod 62 extending in the first direction, and the guide sliding sleeve 61 and the guide sliding rod 62 are slidably sleeved in a one-to-one correspondence.

The cooperative connection between the guide sliding sleeve 61 and the guide sliding rod 62 plays a guiding role in the movement of the material holder mounting plate 8 in the first direction, thereby improving the stability of the movement of the material holder mounting plate 8, and further improving the stability of the movement of the material holder 11.

According to some embodiments of the present disclosure, the guide sliding sleeve 61 is connected to the rack top plate 51, the bottom end of the guide sliding rod 62 is connected to the material holder mounting plate 8, the guide sliding rod 62 is slidably provided in the guide sliding sleeve 61 in a penetrating manner, the top end of the guide sliding rod 62 extends upward out of the rack top plate 51, and the top end of the guide sliding rod 62 is connected to a limiting sleeve.

According to some embodiments of the present disclosure, one of the material holder mounting plate 8 and the material holder 11 is provided with a mounting groove 81, the other is provided with a mounting block 13, and the mounting block 13 is snap-fitted to the mounting groove 81.

The cooperative snap-fit connection between the mounting block 13 and the mounting groove 81 achieves the detachable connection of the material holder mounting plate 8 and the material holder 11.

According to some embodiments of the present disclosure, two mounting grooves 81 are disposed with groove openings facing each other or back-to-back in a plane perpendicular to the first direction, and two mounting blocks 13 are disposed back-to-back or facing each other in the plane perpendicular to the first direction. The two mounting blocks 13 are snap-fitted to the two mounting grooves 81 in a one-to-one correspondence.

The two mounting grooves 81 are disposed with the groove openings facing each other or back-to-back in the plane perpendicular to the first direction, and the two mounting blocks 13 are disposed with the groove openings back-to-back or facing each other in the plane perpendicular to the first direction, so that when the two mounting blocks 13 are snap-fitted to the two mounting grooves 81 in a one-to-one correspondence, the two mounting grooves 81 limit the positions of the two mounting blocks 13 in the first direction, and then the material holder 11 can move synchronously with the material holder mounting plate 8 in the first direction.

According to some embodiments of the present disclosure, the material holder mounting plate 8 includes a main body plate and two snap-fitting plates, the two snap-fitting plates are separately connected to two ends of the bottom of the main body plate in the third direction, each snap-fitting plate is provided with the mounting groove 81 with the groove opening facing the other main body plate, and the mounting groove 81 extends in the second direction and penetrates through two ends of the snap-fitting plate in the second direction. Two ends of the material holder top plate 111 in the third direction are respectively connected to the mounting blocks 13 disposed back-to-back, and the mounting block 13 extends in the second direction.

The mounting block 13 can pass into the mounting groove 81 in the second direction to complete the mounting of the material holder 11 on the material holder mounting plate 8, and the mounting block 13 can move out of the mounting groove 81 in the second direction to complete the detachment of the material holder 11 from the material holder mounting plate 8.

According to some embodiments of the present disclosure, two ends of the mounting block 13 are of wedge-shaped structures, so that the mounting block 13 can pass into the mounting groove 81.

According to some embodiments of the present disclosure, as shown in FIG. 4, a first set position is disposed in the conveying path of the transfer mechanism 3, the first set position is configured to carry the workpiece 1000 or a tray 91 (described in detail later), and the tray 91 can accommodate the workpiece 1000 moved out of the workpiece carrying space.

Therefore, the workpiece 1000 can be directly carried by the transfer mechanism 3, and the workpiece 1000 can also be carried by the tray 91. Therefore, the tray 91 can be used or not used according to the requirements of the subsequent process, which helps to reduce the time spent on placing the tray 91 or removing the tray 91 in the subsequent process.

According to some embodiments of the present disclosure, the material feeding apparatus includes a first sensor 71, the first sensor 71 being configured to detect whether the workpiece 1000 is carried at the first set position.

The first sensor 71 is provided and configured to detect whether the workpiece 1000 is carried at the first set position, so as to determine whether the movement of the material holder 11 needs to be stopped, thereby reducing the risk of placing the workpiece 1000 at an incorrect timing, which can achieve a foolproof effect. When the first sensor 71 detects that the workpiece 1000 is carried at the first set position, the driving mechanism 2 stops driving, the material holder 11 stops moving, and the transfer mechanism 3 is activated to convey the workpiece 1000 carried at the first set position.

According to some embodiments of the present disclosure, the first sensor 71 includes a through-beam photoelectric sensor, the through-beam photoelectric sensor includes a transmitter and a receiver, and the transmitter and the receiver are respectively disposed on two opposite sides of the first set position. Certainly, the first sensor 71 may alternatively be another sensor capable of detecting the presence of an object. For example, the first sensor may be a camera.

When the workpiece 1000 is carried at the first set position, the signal transmitted from the transmitter cannot reach the receiver due to the blocking of the workpiece 1000. When no workpiece 1000 is at the first set position, the signal transmitted from the transmitter can reach the receiver. Therefore, when the receiver receives the signal transmitted from the transmitter, the workpiece 1000 is not carried at the first set position, and when the receiver does not receive the signal transmitted from the transmitter, the workpiece 1000 is carried at the first set position.

According to some embodiments of the present disclosure, the through-beam photoelectric sensor includes an infrared through-beam sensor, a laser through-beam sensor, or the like. For a specific structure and a working principle of the through-beam photoelectric sensor, reference may be made to the prior art. Details are not described herein again.

According to some embodiments of the present disclosure, a detecting member mounting frame includes an even number of mounting rods 72, the even number of mounting rods 72 are equally divided into two groups, and the two groups are respectively disposed on two opposite sides of the rack 5. The first sensor 71 includes the through-beam photoelectric sensor, and the through-beam photoelectric sensor includes the transmitter and the receiver. For every two mounting rods 72 opposite to each other with respect to the material holder 11, one is provided with the transmitter, and the other is provided with the receiver. The first set position is located between the opposite transmitter and receiver.

The mounting rod 72 is provided and configured to mount the transmitter and the receiver.

According to some embodiments of the present disclosure, as shown in FIG. 4, the movement path of the material holder 11 is provided with a plurality of preset pause positions sequentially spaced apart from each other in the first direction. The plurality of preset pause positions and a plurality of the workpiece carrying spaces are disposed in a one-to-one correspondence. Each time the material holder 11 moves to one preset pause position in the first direction, the first set position passes through the preset distance of the workpiece carrying space and becomes a state of carrying the workpiece 1000.

According to some embodiments of the present disclosure, as shown in FIG. 5, the material feeding apparatus further includes a material holder position detection assembly 73, the material holder position detection assembly 73 being configured to detect whether the material holder 11 is located at the preset pause position.

It should be noted that, when the transfer mechanism 3 enters the workpiece carrying space, the workpiece 1000 in the workpiece carrying space can be in contact with the first set position of the transfer mechanism 3, but the workpiece 1000 cannot be moved out of the workpiece carrying space in the second direction due to the limitation of the limiting block 1212 of the carrying part 12. Therefore, the material holder 11 pauses after the transfer mechanism 3 passes through the workpiece carrying space by a preset distance. At this point, the transfer mechanism 3 has moved the workpiece 1000 out of the workpiece carrying space in the first direction, and in this case, the workpiece 1000 is not limited by the carrying part 12 and can be smoothly moved to the workpiece conveyor line 4 under the conveying of the transfer mechanism 3.

As for the determination of the preset distance, the preset distance may be determined according to the position of the side opening of the material holder 11, the distance between two adjacent layers of the carrying parts 12, and the positional height of the conveying path of the workpiece conveyor line 4 in the first direction, as long as it can be ensured that when the material holder 11 is at the preset pause position, the workpiece 1000 at the first position of the transfer mechanism 3 has moved out of the workpiece carrying space in the first direction and can be conveyed to the conveying path of the workpiece conveyor line 4 in the second direction. The specific value of the preset distance is not specifically limited herein.

Each time the material holder position detection assembly 73 detects that the material holder 11 moves to one preset pause position, the material holder 11 stops for a set time. At this point, the first sensor 71 detects whether the workpiece 1000 is carried at the first set position. If the workpiece 1000 is detected at the first set position, the material holder 11 remains in the stopped state after the set stop time, and the transfer mechanism 3 is activated. The transfer mechanism 3 conveys the workpiece 1000 to the workpiece conveyor line 4, and the material holder 11 resumes movement only after confirmation that the workpiece 1000 has been conveyed to the workpiece conveyor line 4. If no workpiece 1000 is detected at the first set position, the material holder 11 moves immediately after the set stop time.

According to some embodiments of the present disclosure, as shown in FIGs. 4 and 5, the material holder position detection assembly 73 includes a second sensor 731 and a detection cooperation plate 732. One of the second sensor 731 and the detection cooperation plate 732 is disposed on the material holder 11, and the other is disposed on the rack 5. The detection cooperation plate 732 is provided with a plurality of openings sequentially spaced apart from each other in the first direction. The second sensor 731 is configured to be capable of detecting whether the plurality of openings pass by, and each time the second sensor 731 detects that one opening passes by, the material holder 11 is located at one preset pause position.

The second sensor 731 cooperates with the detection cooperation plate 732 to enable the material holder position detection assembly 73 to detect the position of the material holder 11.

According to some embodiments of the present disclosure, the second sensor 731 includes a ranging sensor, the ranging sensor being disposed toward the detection cooperation plate 732.

The ranging sensor is a sensor configured to detect the distance, and may be a laser ranging sensor, an infrared ranging sensor, an ultrasonic ranging sensor, or the like. For a specific structure and a working principle, reference may be made to the prior art. Details are not described herein again.

In the case where the detection cooperation plate 732 moves relative to the ranging sensor in the first direction, when the distance detected by the ranging sensor is the set distance, it indicates that the detection signal emitted by the ranging sensor is transmitted to the solid part of the detection cooperation plate 732, that is, the opening of the detection cooperation plate 732 does not pass by. When the distance detected by the ranging sensor suddenly changes from the set distance to another relatively large distance, it indicates that the detection signal emitted by the ranging sensor passes through the opening of the detection cooperation plate 732, that is, the opening of the detection cooperation plate 732 passes by. Therefore, the position of the material holder 11 can be detected through the cooperation between the ranging sensor and the detection cooperation plate 732.

According to some embodiments of the present disclosure, the second sensor 731 includes a through-beam photoelectric sensor, the through-beam photoelectric sensor includes a transmitter and a receiver, and the transmitter and the receiver are respectively disposed on two opposite sides of the detection cooperation plate 732.

The through-beam photoelectric sensor may be an infrared through-beam sensor, a laser through-beam sensor, or the like. For a specific structure and a working principle of the through-beam photoelectric sensor, reference may be made to the prior art. Details are not described herein again.

In the case where the detection cooperation plate 732 moves relative to the through-beam photoelectric sensor in the first direction, when the opening of the detection cooperation plate 732 passes by the position between the transmitter and the receiver, the signal emitted by the transmitter can be received by the receiver through the opening. Therefore, when the receiver receives the signal, the second sensor 731 detects that the opening passes by. After the opening of the detection cooperation plate 732 passes by and when the solid part of the detection cooperation plate 732 passes by the position between the transmitter and the receiver, the receiver cannot receive the signal transmitted by the transmitter due to the blocking of the solid part. Therefore, when the receiver does not receive the signal, the second sensor 731 does not detect that the opening passes by. Therefore, the position of the material holder 11 can be detected through the cooperation between the through-beam photoelectric sensor and the detection cooperation plate 732.

According to some embodiments of the present disclosure, the material feeding apparatus further includes a controller 10. The first sensor 71, the second sensor 731, the driving mechanism 2, and the transfer mechanism 3 are all in communication connection with the controller.

FIG. 9 is a schematic view of a composition of an action control module of a material feeding apparatus according to some embodiments of the present disclosure.

As shown in FIG. 9, when the controller 10 obtains the signal detected by the second sensor 731 and indicating that the material holder 11 is located at the preset pause position, the driving mechanism 2 is controlled to pause the movement of the material holder 11 for a set time, and the first sensor 71 is controlled to perform detection. When the controller obtains the signal detected by the first sensor 71 and indicating that the workpiece 1000 is at the first set position, the driving mechanism 2 is controlled to extend the stopping time, the transfer mechanism 3 is activated, and the transfer mechanism 3 conveys the workpiece 1000 located at the first set position.

It should be noted that, when the controller obtains the signal detected by the material holder position detection assembly 73 and indicating that the material holder 11 is located at the preset pause position, the driving mechanism 2 is controlled to pause the movement of the material holder 11 for a set time, and the first sensor 71 is controlled to perform detection. In the case where the first sensor 71 does not detect that the workpiece 1000 is at the first set position, the controller controls the driving mechanism 2 to pause the movement of the material holder 11 for a set time and then immediately start the movement of the material holder 11.

When the transfer mechanism 3 conveys the workpiece 1000 located at the first set position to the workpiece conveyor line 4, the controller controls the driving mechanism 2 to start the movement of the material holder 11 and controls the transfer mechanism 3 to close, and then the above operation process is repeated until the required number of workpieces 1000 are completely fed.

It should be noted that, throughout the material feeding operation, the workpiece conveyor line 4 may always be in a conveying state, or a detection sensor may be disposed on the workpiece conveyor line 4. When the detection sensor detects that the workpiece 1000 is in the conveying path, conveying is started, and when the detection sensor detects that no workpiece 1000 is in the conveying path, conveying is stopped. This is not specifically limited herein.

According to some embodiments of the present disclosure, as shown in FIGs. 1 and 6, a second set position and a third set position located downstream of the second set position are disposed in the conveying path of the workpiece conveyor line 4, and the transfer mechanism 3 is capable of transferring the workpiece 1000 from the workpiece carrying space to the second set position of the workpiece conveyor line 4. A positioning structure 45 is disposed at the third set position of the workpiece conveyor line 4, the positioning structure 45 is configured to be capable of limiting the positions of two opposite sides of the workpiece 1000 at the third set position in the third direction, and the third direction intersects with both the first direction and the second direction.

The positioning structure 45 is configured to limit the positions of two opposite sides of the workpiece 1000 in the third direction to correct the position of the workpiece 1000, so as to facilitate the discharging operation in the subsequent working section.

According to some embodiments of the present disclosure, the positioning structure 45 includes two first side blocking parts 451, the two first side blocking parts 451 being respectively located on two opposite sides of the workpiece conveyor line 4 at the third set position in the third direction.

The first side blocking part 451 may be of a block-shaped structure or a plate-shaped structure, and the specific structure is not specifically limited herein. Side walls of the two first side blocking parts 451 facing each other include, but are not limited to, surfaces extending in the second direction.

The two first side blocking parts 451 can respectively limit two opposite sides of the workpiece 1000 at the third set position in the third direction, thereby correcting the position of the workpiece 1000 to facilitate the tape attachment operation in the subsequent working section.

According to some embodiments of the present disclosure, one end of the first side blocking part 451 proximal to the second set position is provided with a guide structure 452, and a distance between two opposite side walls of the two guide structures 452 in the third direction gradually decreases in the conveying direction of the workpiece conveyor line 4.

The structure of the guide structure 452 may be a block body or a plate body, as long as it satisfies the condition that the distance between the two opposite side walls of the two guide structures 452 gradually decreases in the conveying direction of the workpiece conveyor line 4.

The limitation of the side walls of the two guide structures 452 plays a guiding role for the workpiece 1000 to enter the space between the two first side blocking parts 451, so that the workpiece 1000 conveyed from the second set position can smoothly enter the positioning structure at the third set position. As a result, the workpiece 1000 can be positioned and the workpiece 1000 can be conveyed at the same time.

According to some embodiments of the present disclosure, as shown in FIG. 7, the first set position is disposed in the conveying path of the transfer mechanism 3, the tray 91 is disposed at the first set position, and the tray 91 is capable of accommodating the workpiece 1000 moved out of the workpiece carrying space.

The workpiece 1000 is carried at the transfer mechanism 3 and the workpiece conveyor line 4 via the tray 91, preventing the workpiece 1000 from wear and impact during the conveying process, thereby protecting the workpiece 1000.

According to some embodiments of the present disclosure, a tray conveyor line 92 is disposed on a side of the material holder 11 facing away from the workpiece conveyor line 4 in the second direction, the tray conveyor line 92 being configured to convey the tray 91 to the conveying path of the transfer mechanism 3.

The tray conveyor line 92 is configured to convey the tray 91 to the transfer mechanism 3, and the tray conveyor line 92 is configured for one-way conveying, eliminating the need for back-and-forth movement like a robotic arm. The tray conveyor line 92 has high efficiency for conveying the tray 91, thereby preventing the conveying speed of the tray 91 from affecting the material feeding rate of the workpiece 1000.

According to some embodiments of the present disclosure, as shown in FIG. 8, the material feeding apparatus includes a stopper structure 93 capable of ascending and descending, and the stopper structure 93 is configured to stop the tray 91 at the first set position.

During the process where the tray conveyor line 92 conveys the tray 91 to the transfer mechanism 3, the transfer mechanism 3 is in a conveying state. Otherwise, the tray 91 cannot smoothly move into the conveying path of the transfer mechanism 3. Therefore, the tray 91 located in the conveying path of the transfer mechanism 3 needs to be stopped. By providing the stopper structure 93, the tray 91 is stopped at the first set position, so as to facilitate the subsequent placement of the workpiece 1000 into the tray 91.

The stopper structure 93 can descend to remove the stop on the tray 91, so that the tray 91 can smoothly move from the transfer mechanism 3 to the workpiece conveyor line 4.

According to some embodiments of the present disclosure, the stopper structure 93 is connected to the output end of a driving member 94, the driving member 94 is mounted on the support body of the transfer mechanism 3, and the driving member 94 is capable of driving the stopper structure 93 to ascend or descend.

The driving member 94 is a linear driving device, and may be a linear motor, a cylinder, or the like.

According to some embodiments of the present disclosure, the workpiece 1000 includes a side plate of a battery.

The material feeding apparatus according to the embodiments of the present disclosure may be applied to the feeding of the side plate in the battery assembly process. The side plate is conveyed by the workpiece conveyor line 4, and the workpiece conveyor line 4 performs the one-way operation, eliminating the need for back-and-forth movement like the robotic arm. The workpiece conveyor line 4 has the characteristics of being continuous, uniform, and stable, helping to accelerate the material feeding pace, thereby maintaining a relatively high conveying speed throughout the operation. Therefore, in the embodiments of the present disclosure, the time for conveying the side plate is saved, and the material discharging interval of the side plate can be shortened, thereby improving the efficiency of feeding the side plate.

According to some embodiments of the present disclosure, as shown in FIG. 7, the tray 91 includes a tray body and a plurality of limiting structures 911 disposed on the tray body. The workpiece 1000 is located in the tray body, and the plurality of limiting structures 911 are separately provided around the peripheral side walls of the workpiece 1000 in a blocking manner.

The limiting structure 911 includes an elastic abutting surface, and the elastic abutting surface abuts against the side wall of the workpiece 1000, which not only limits the position of the workpiece 1000, but also prevents the workpiece 1000 from being scratched.

In order to improve the smoothness of the workpiece 1000 entering the tray 91, the top end of the inner side wall of each limiting structure 911 is provided with an inclined lead-in surface.

According to some embodiments of the present disclosure, as shown in FIGs. 1 and 6, the workpiece conveyor line 4 includes a first conveying frame 41, first roller shafts 42, a first belt 43, and a first driving member 44. The first conveying frame 41 is disposed beside the material holder 11 and extends in the second direction; the first conveying frame 41 is provided with the first roller shafts 42 at least at two ends thereof; two ends of the first belt 43 are respectively wound around the two first roller shafts 42; the first driving member 44 is mounted on the first conveying frame 41, the output shaft thereof is connected to one of the first roller shafts 42, and the first driving member 44 is capable of driving the first roller shaft 42 connected thereto to rotate, so as to drive the first belt 43 to perform transmission.

During operation, the workpiece 1000 or the tray 91 is placed on the first belt 43, and the workpiece 1000 or the tray 91 thereon is driven to move by the first belt 43 during conveyance.

According to some embodiments of the present disclosure, as shown in FIG. 7, the workpiece conveyor line 4 includes a second conveying frame, rollers, a transmission chain, and a second driving member. The second conveying frame is disposed beside the material holder 11 and extends in the second direction; the second conveying frame is provided with the plurality of rollers sequentially spaced apart from each other in the second direction, the transmission chain is connected between the rollers, the second driving member is connected to one of the rollers, and the second driving member drives the roller connected thereto to rotate, thereby driving each roller to rotate under the transmission effect of the transmission chain.

During operation, the tray 91 is placed on the roller, and the roller rotates to drive the tray 91 to move, thereby conveying the workpiece 1000 in the tray 91.

The specific structures of the transfer mechanism 3 and the tray conveyor line 92 may be similar to the structure of the workpiece conveyor line 4 in any one of the above embodiments, which will not be repeated herein.

The material feeding method according to the embodiments of the present disclosure will be described below with reference to the accompanying drawings.

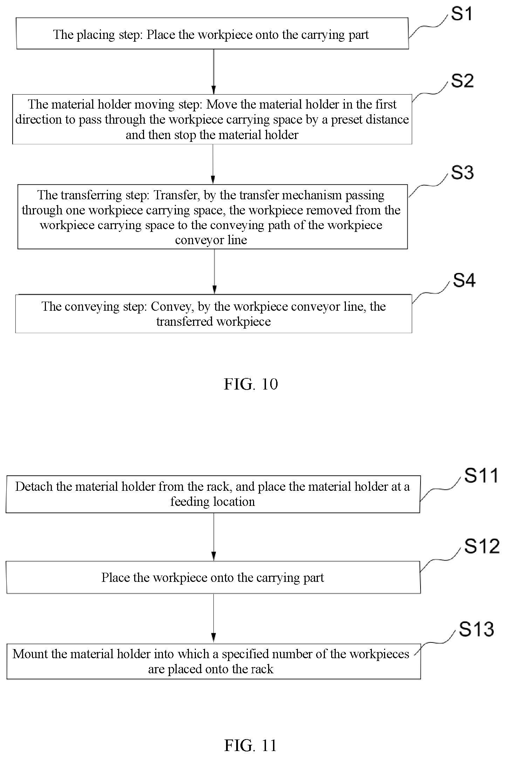

FIG. 10 is one schematic flowchart of a material feeding method according to some embodiments of the present disclosure; FIG. 11 is another schematic flowchart of a material feeding method according to some embodiments of the present disclosure.

As shown in FIG. 10, the embodiments of the present disclosure further provide a material feeding method, feeding a workpiece 1000 by using a material feeding apparatus. The material feeding apparatus includes a material holder 11, a workpiece conveyor line 4, and a transfer mechanism 3. The material holder 11 is provided with at least two layers of carrying parts 12, all layers of the carrying parts 12 are sequentially spaced apart from each other in the first direction, and the carrying part 12 on the same layer defines a workpiece carrying space for accommodating the workpiece 1000. The material feeding method includes the following steps:
S1, a placing step: placing the workpiece onto the carrying part;
S2, a material holder moving step: moving the material holder in the first direction to pass through the workpiece carrying space by a preset distance and then stopping the material holder;
S3, a transferring step: transferring, by the transfer mechanism passing through one workpiece carrying space, the workpiece removed from the workpiece carrying space to the conveying path of the workpiece conveyor line; and
S4, a conveying step: conveying, by the workpiece conveyor line, the transferred workpiece.

As shown in FIG. 11, according to some embodiments of the present disclosure, the material feeding apparatus further includes a rack 5, the material holder 11 is disposed inside the rack 5, and the placing step includes the following steps.

In S11, the material holder is detached from the rack and placed at a feeding location.

The material holder 11 moves in the reverse direction of the second direction, so that the mounting block 13 of the material holder 11 slides out of the mounting groove 81 of the material holder mounting plate 8, completing the detachment of the material holder 11 from the rack 5.

In S12, the workpiece is placed into the carrying part.

The workpiece 1000 is placed into the carrying part 12 through the side opening of the material holder 11 in the second direction or through the space between two material holder supporting columns 112 in the third direction.

In S13, the material holder into which a specified number of the workpieces are placed is mounted onto the rack.

The material holder 11 is lifted or elevated to a position where the mounting block 13 of the material holder 11 is aligned with the mounting groove 81 of the material holder mounting plate 8 in the second direction, the material holder 11 moves in the second direction, and the mounting block 13 of the material holder 11 slides into the mounting groove 81 of the material holder mounting plate 8, thereby completing the action of mounting the material holder 11 onto the rack 5.

According to some embodiments of the present disclosure, in the material holder moving step, a driving mechanism 2 is activated to drive the material holder 11 to move in the first direction, and when a material holder position detection assembly 73 detects that the material holder 11 moves to one preset pause position, the driving mechanism 2 pauses for a set time; within the set time during which the driving mechanism 2 pauses, a first sensor 71 performs detection, and if the first sensor 71 detects that the workpiece 1000 is at the first set position, the driving mechanism 2 extends the stopping time, and activates the transfer mechanism 3 to perform the transferring step; if the first sensor 71 does not detect that the workpiece 1000 is at the first set position, the driving mechanism 2 is activated again after pausing for the set time, and continues to feed the material holder 11.

According to some embodiments of the present disclosure, in the transferring step, the transfer mechanism 3 is activated to convey the workpiece 1000 located at the first set position in the second direction to the second set position of the workpiece conveyor line 4. In the case where no workpiece 1000 is at the first set position of the transfer mechanism 3, the driving mechanism 2 is activated again after pausing for the set time, and continues to feed the material holder 11.

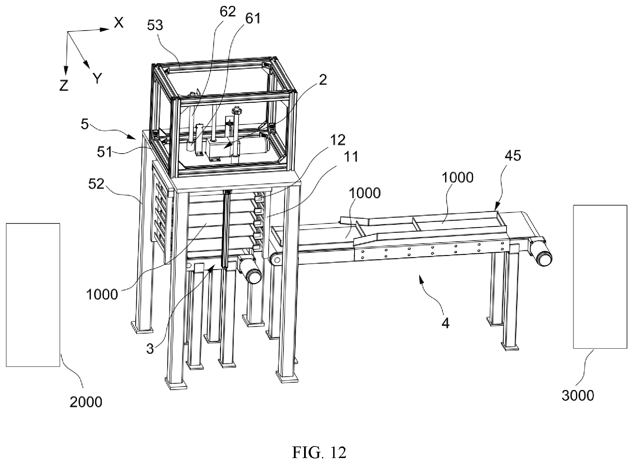

The battery assembly line according to the embodiments of the present disclosure will be described below with reference to FIG. 12.

FIG. 12 is a schematic view of a composition of a battery assembly line according to some embodiments of the present disclosure.

As shown in FIG. 12, the embodiments of the present disclosure further provide a battery assembly line. The battery assembly line includes a logistics line 2000, a side plate tape attachment device 3000, and the material feeding apparatus described above. The logistics line 2000 is configured to convey a workpiece, and the workpiece 1000 includes a side plate. The side plate tape attachment device 3000 is configured to attach tape to the workpiece 1000. The workpiece 1000 conveyed by the logistics line 2000 is loaded on the carrying part 12 on the material holder 11 of the material feeding apparatus. The transfer mechanism 3 of the material feeding apparatus can transfer the workpiece 1000 of the carrying part 12 to the conveying path of the workpiece conveyor line 4, the workpiece conveyor line 4 is capable of conveying the workpiece 1000 transferred to the conveying path of the workpiece conveyor line 4 to the third set position for positioning, and the side plate tape attachment device 3000 attaches the tape to the workpiece at the third set position.

The above embodiments are only used to illustrate the technical solutions of the present disclosure, rather than limit the same. Although the present disclosure has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present disclosure, and shall all fall within the scope of the present disclosure. In particular, the technical features mentioned in the embodiments can be combined in any manner, provided that there is no structural conflict.

### Industrial Applicability

The embodiments of the present disclosure provide a material feeding apparatus, a material feeding method, and a battery assembly line. By continuously conveying the workpiece through the workpiece conveyor line, there is no need to use a robotic arm or the like to carry the workpiece back and forth, which is conducive to accelerating the material feeding pace and maintaining a relatively high conveying speed throughout the operation. Therefore, in the embodiments of the present disclosure, the time for conveying the workpiece is saved, and the material discharging interval of the workpiece can be shortened, thereby improving the efficiency of feeding the workpiece.

## Claims

1. A material feeding apparatus, comprising:
a material holder, wherein the material holder is provided with at least two layers of carrying parts, all layers of the carrying parts are sequentially spaced apart from each other in a first direction, the carrying part on a same layer defines a workpiece carrying space configured to accommodate a workpiece, and the carrying part is capable of reciprocating in the first direction along with the material holder;
a workpiece conveyor line, wherein the workpiece conveyor line is configured to convey the workpiece, and a conveying path of the workpiece conveyor line extends in a second direction intersecting with the first direction; and
a transfer mechanism, wherein the transfer mechanism is configured to be capable of entering and exiting the workpiece carrying space, and the transfer mechanism is configured to transfer the workpiece from the workpiece carrying space to the conveying path of the workpiece conveyor line.

2. The material feeding apparatus according to claim 1, wherein the transfer mechanism is configured to be capable of entering and exiting the workpiece carrying space in the first direction and is provided with a conveying path extending in the second direction, and the conveying path of the transfer mechanism is disposed close to the conveying path of the workpiece conveyor line in the second direction;
the transfer mechanism is configured to take the workpiece out of the workpiece carrying space and convey the workpiece in the second direction to the conveying path of the workpiece conveyor line.

3. The material feeding apparatus according to claim 2, wherein the material holder is provided with a bottom opening for the transfer mechanism to enter and exit the workpiece carrying space;
in a case where the material holder moves toward the transfer mechanism in the first direction, the transfer mechanism enters the workpiece carrying space through the bottom opening, so that the workpiece in the workpiece carrying space is carried on the conveying path of the transfer mechanism.

4. The material feeding apparatus according to claim 3, wherein the material holder is provided with a side opening at least between two adjacent layers of the carrying parts, the side opening faces a side where the workpiece conveyor line is located in the second direction, and the side opening allows the workpiece carried by the transfer mechanism to pass through.

5. The material feeding apparatus according to claim 4, wherein in the first direction, a minimum distance between two adjacent layers of the carrying parts is greater than a maximum dimension of the workpiece.

6. The material feeding apparatus according to any one of claims 2 to 5, wherein all layers of the carrying parts each comprise two carrying structures, the two carrying structures are separately connected to the material holder, the two carrying structures on a same layer are oppositely disposed and spaced apart from each other, and
in the second direction, a minimum distance between the two carrying structures on the same layer is greater than a maximum dimension of the transfer mechanism.

7. The material feeding apparatus according to claim 6, wherein each carrying structure comprises a first plate extending in a third direction and a limiting block disposed at an end part of the first plate, the first plate is connected to a side wall of the material holder, the third direction intersects with both the first direction and the second direction, and
paired limiting blocks are disposed facing each other in the second direction.

8. The material feeding apparatus according to claim 6, wherein the carrying structure comprises a steel wire rope extending in the third direction, two ends of the steel wire rope are respectively connected to two opposite side parts of the material holder, and the third direction intersects with both the first direction and the second direction.

9. The material feeding apparatus according to any one of claims 2 to 8, wherein a first set position is disposed in the conveying path of the transfer mechanism, the first set position is configured to carry the workpiece or a tray, and the tray is capable of accommodating the workpiece moved out of the workpiece carrying space.

10. The material feeding apparatus according to claim 9, wherein a tray conveyor line is disposed on a side of the material holder facing away from the workpiece conveyor line in the second direction, the tray conveyor line being configured to convey the tray to the conveying path of the transfer mechanism.

11. The material feeding apparatus according to claim 10, wherein the material feeding apparatus comprises a stopper structure capable of ascending and descending, and the stopper structure is configured to stop the tray at the first set position.

12. The material feeding apparatus according to any one of claims 9 to 11, wherein the material feeding apparatus further comprises a driving mechanism and a rack, the driving mechanism is disposed on an upper part of the rack, the material holder is disposed inside the rack, and an output end of the driving mechanism is connected to the material holder and is configured to drive the material holder to reciprocate in the first direction.

13. The material feeding apparatus according to claim 12, wherein one of the rack and the material holder is provided with at least one guide sliding sleeve, the other is provided with at least one guide sliding rod extending in the first direction, and the guide sliding sleeve and the guide sliding rod are slidably sleeved in a one-to-one correspondence.

14. The material feeding apparatus according to claim 12, wherein the material feeding apparatus comprises a first sensor, the first sensor being configured to detect whether the workpiece is carried at the first set position.

15. The material feeding apparatus according to any one of claims 12 to 14, wherein a plurality of preset pause positions sequentially spaced apart from each other in the first direction are provided in a movement path of the material holder;
the plurality of preset pause positions are disposed in a one-to-one correspondence with a plurality of the workpiece carrying spaces, and each time the material holder moves to one of the plurality of preset pause positions in the first direction, the first set position passes through the workpiece carrying space by a preset distance and becomes a state of carrying the workpiece.

16. The material feeding apparatus according to claim 15, wherein the material feeding apparatus further comprises a material holder position detection assembly, the material holder position detection assembly being configured to detect whether the material holder is located at the preset pause position.

17. The material feeding apparatus according to claim 16, wherein the material holder position detection assembly comprises a second sensor and a detection cooperation plate, one of the second sensor and the detection cooperation plate is disposed on the material holder, the other is disposed on the rack, the detection cooperation plate is provided with a plurality of openings sequentially spaced apart from each other in the first direction, the second sensor is configured to be capable of detecting whether the plurality of openings pass by, and each time the second sensor detects that one of the plurality of openings passes by, the material holder is located at one of the preset pause positions.

18. The material feeding apparatus according to any one of claims 12 to 17, wherein the material feeding apparatus further comprises a material holder mounting plate, the material holder mounting plate is connected to the output end of the driving mechanism, the driving mechanism is capable of driving the material holder mounting plate to reciprocate in the first direction, and the material holder is detachably connected to the material holder mounting plate.

19. The material feeding apparatus according to claim 18, wherein one of the material holder mounting plate and the material holder is provided with a mounting groove, the other is provided with a mounting block, and the mounting block is snap-fitted to the mounting groove.

20. The material feeding apparatus according to claim 19, wherein two mounting grooves are disposed with groove openings facing each other or back-to-back in a plane perpendicular to the first direction, and two mounting blocks are disposed back-to-back or facing each other in the plane perpendicular to the first direction.

21. The material feeding apparatus according to any one of claims 1 to 20, wherein
a second set position and a third set position located downstream of the second set position are disposed in the conveying path of the workpiece conveyor line, and the transfer mechanism is capable of transferring the workpiece from the workpiece carrying space to the second set position of the workpiece conveyor line;
a positioning structure is disposed at the third set position of the workpiece conveyor line, the positioning structure is configured to be capable of limiting positions of two opposite sides of the workpiece at the third set position in the third direction, and the third direction intersects with both the first direction and the second direction.

22. The material feeding apparatus according to claim 21, wherein the positioning structure comprises two first side blocking parts, the two first side blocking parts being respectively located on two opposite sides of the workpiece conveyor line at the third set position in the third direction.

23. The material feeding apparatus according to claim 22, wherein one end of the first side blocking part proximal to the second set position is provided with a guide structure, and a distance between two opposite side walls of two said guide structures in the third direction gradually decreases in a conveying direction of the workpiece conveyor line.

24. The material feeding apparatus according to any one of claims 1 to 23, wherein the workpiece comprises a side plate of a battery.

25. A material feeding method, feeding a workpiece by using a material feeding apparatus, the material feeding apparatus comprising a material holder, a workpiece conveyor line, and a transfer mechanism, wherein the material holder is provided with at least two layers of carrying parts, all layers of the carrying parts are sequentially spaced apart from each other in a first direction, the carrying part on a same layer defines a workpiece carrying space configured to accommodate a workpiece, and the carrying part is capable of reciprocating in the first direction along with the material holder; the workpiece conveyor line is configured to convey the workpiece, and a conveying path of the workpiece conveyor line extends in a second direction intersecting with the first direction; and the transfer mechanism is configured to be capable of entering and exiting the workpiece carrying space, and the transfer mechanism is configured to transfer the workpiece from the workpiece carrying space to the conveying path of the workpiece conveyor line; and
the material feeding method comprising:
a placing step: placing the workpiece onto the carrying part;
a material holder moving step: moving the material holder in the first direction to pass through the workpiece carrying space by a preset distance and then stopping the material holder;
a transferring step: transferring, by the transfer mechanism passing through one of the workpiece carrying spaces, the workpiece removed from the workpiece carrying space to the conveying path of the workpiece conveyor line; and
a conveying step: conveying, by the workpiece conveyor line, the transferred workpiece.

26. The material feeding method according to claim 25, wherein the material feeding apparatus further comprises a rack, and the material holder is disposed inside the rack;
the placing step comprises:
detaching the material holder from the rack, and placing the material holder at a feeding location;
placing the workpiece onto the carrying part; and
mounting the material holder into which a specified number of the workpieces are placed onto the rack.

27. A battery assembly line, comprising:
the material feeding apparatus according to any one of claims 1 to 24; and
a logistics line, wherein the logistics line is configured to convey a workpiece, the workpiece comprising a side plate; and
a side plate tape attachment device, the side plate tape attachment device being configured to attach tape to the workpiece, wherein
the workpiece conveyed by the logistics line is loaded on the carrying part of the material holder of the material feeding apparatus, the transfer mechanism is capable of transferring the workpiece carried by the carrying part to the conveying path of the workpiece conveyor line, the workpiece conveyor line is capable of conveying the workpiece transferred to the conveying path of the workpiece conveyor line to a third set position for positioning, and the side plate tape attachment device attaches the tape to the workpiece located at the third set position.
